# EUROPEAN PATENT APPLICATION

(11) **EP 2 369 660 A1**
(43) Date of publication of application: **28.09.2011**
(21) Application number: 09835088.7
(22) Date of filing: 22.12.2009
(51) Int. Cl.: H01M 4/525, C01G 51/00, H01M 4/131

(54) **PLATE-SHAPED PARTICLES FOR POSITIVE ELECTRODE ACTIVE MATERIAL OF LITHIUM SECONDARY BATTERIES, FILMS OF SAID MATERIAL, AS WELL AS LITHIUM SECONDARY BATTERIES**

(30) Priority: 24.12.2008 JP 2008326997; 17.03.2009 JP 2009064862; 10.06.2009 JP 2009138984; 21.08.2009 JP 2009191702; 09.10.2009 JP 2009235096
(71) Applicant: NGK Insulators, Ltd., Nagoya-shi, Aichi-ken 467-8530 (JP)
(72) Inventor: SUGIURA, Ryuta, Nagoya-shi Aichi 4678530 (JP); KOBAYASHI, Nobuyuki, Nagoya-shi Aichi 4678530 (JP); YOKOYAMA, Shohei, Nagoya-shi Aichi 4678530 (JP); NANATAKI, Tsutomu, Nagoya-shi Aichi 4678530 (JP)
(74) Representative: Paget, Hugh Charles Edward
(86) International application number: PCT/JP2009/071832
(87) International publication number: WO 2010/074298

(57) **Abstract**

An object of the present invention is to provide a lithium secondary battery which has improved capacity, durability, and rate characteristic as compared with conventional lithium secondary batteries. A plate-like particle or a film for a lithium secondary battery cathode active material is represented by the following general formula:

General formula: Liₚ(Niₓ,Co_{y},Al_{z})O₂

(wherein 0.9 ≤ p ≤ 1.3,0.6 < x ≤ 0.9,0.1 < y ≤ 0.3, 0 ≤ z ≤ 0.2, x + y + z = 1)
The particle or the film contains cobalt and lithium and has a layered rock salt structure. The (003) plane is oriented so as to intersect the plate surface of the particle or film.

## Description

### Technical Field

The present invention relates to a plate-like particle for the cathode active material for a lithium secondary battery (the definition of a plate-like particle will be described later) and a cathode active material film for a lithium secondary battery (the distinction between a film and particles will be described later). Further, the present invention relates to a lithium secondary battery having a positive electrode which includes the above-mentioned plate-like particle or film.

### Background Art

A cathode active material having a so-called α-NaFeO₂ type layered rock salt structure, especially a cobalt-based cathode active material (containing only cobalt as a transition metal other than lithium: typically LiCoO₂) is widely used as a material for producing a positive electrode of a lithium secondary battery (may be referred to as a lithium ion secondary cell) (e.g., Japanese Patent Application Laid-Open (*kokai*) No. 2003-132887).

In such a cathode active material having a layered rock salt structure, intercalation and deintercalation of lithium ions (Li⁺) occur through a crystal plane other than the (003) plane (e.g., the (101) plane or the (104) plane). Through such intercalation and deintercalation of lithium ions, charge and discharge are carried out.

### Summary of the Invention

A cathode active material of this kind for a cell brings about improvement in cell characteristics by means of exposure of the crystal plane, through which lithium ions are favorably intercalated and deintercalated (other than the (003) plane: for example, the (101) plane or the (104) plane) as much extent as possible to an electrolyte. Conventionally, it was unknown how to improve cell characteristics in connection with materials (especially, multicomponent system such as nickel-cobalt system) other than the widely used conventional cobalt-based cathode active materials.

The present invention has been conceived to solve such a problem. That is, an object of the present invention is to provide a multi component cathode active material for a lithium secondary battery which has improved cell characteristics and a layered rock salt structure (nickel-cobalt system: including those in which a part of nickel has been substituted with aluminum).

In one aspect of the present invention, a plate-like particle for a lithium secondary battery cathode active material, the particle being represented by the following general formula and having a layered rock salt structure, is characterized in that the (003) plane in the layered rock salt structure is oriented so as to intersect the plate surface of the particle (the definition of the plate surface will be described later).

General formula: Liₚ(Niₓ,CO_{y},Al_{z})O₂

(wherein 0.9 ≤ p ≤ 1.3, 0.6 < x ≤ 0.9, 0.1 < y ≤ 0.3, 0 ≤ z ≤ 0.2, x + y + z = 1)

That is, the particle is formed such that a plane other than the (003) plane (e.g., the (104) plane) is oriented in parallel with the plate surface. The particle can be formed to a thickness of 100 µm or less (e.g., 20 µm or less).

Preferably, "p" falls within a range of 0.9 ≤ p ≤ 1.3, more preferably within a range of 1.0 ≤ p ≤ 1.1. Since the discharge capacity deteriorate, p of less than 0.9 is unpreferable. In addition, since the discharge capacity deteriorate and generation of gas within a battery on charging increase, p of 1.3 or more is unpreferable.

Since the discharge capacity deteriorate, x of less than 0.6 is unpreferable. In addition, since the safeness deteriorate, x of more than 0.9 is unpreferable. x is preferably 0.7 to 0.85.

Since the crystal structure becomes unstable, y of 0.1 or less is unpreferable. In addition, since the discharge capacity deteriorate, y of more than 0.3 is unpreferable. y is preferably 0.12 to 0.25.

Since the discharge capacity deteriorate, z of more than 0.2 is unpreferable. z is preferably 0.02 to 0.1.

As far as meeting the requirements defined by the above general formula, there may be contained one or more elements of Mg, Al, Si, Ca, Ti, V, Cr, Fe, Cu, Zn, Ga, Ge, Sr, Y, Zr, Nb, Mo, Ag, Sn, Sb, Te, Ba, Bi, etc.

"Layered rock salt structure" refers to a crystal structure in which lithium layers and layers of a transition metal other than lithium are arranged in alternating layers with an oxygen layer therebetween; i.e., a crystal structure in which transition metal ion layers and lithium layers are arranged in alternating layers via oxide ions (typically, α-NaFeO₂ type structure: structure in which a transition metal and lithium are arrayed orderly in the direction of the [111] axis of cubic rock salt type structure). "The (104) plane is oriented in parallel with the plate surface" can be rephrased as: the (104) plane is oriented such that the [104] axis, which is normal to the (104) plane, is in parallel with the direction of the normal to the plate surface.

The above-mentioned characteristic can be rephrased as: in the plate-like particle for a lithium secondary battery cathode active material of the present invention, the [003] axis in the layered rock salt structure is in a direction which intersects the normal to the plate surface of the particle. That is, the particle is formed such that a crystal axis (e.g., the [104] axis) which intersects the [003] axis is in a direction orthogonal to the plate surface.

"Plate-like particle" refers to a particle whose external shape is plate-like. The concept of "plate-like" is apparent under social convention without need of particular description thereof in the present specification. However, if the description were to be added, "plate-like" would be defined, for example, as follows.

Namely, "plate-like" refers to a state in which, when a particle which is placed on a horizontal surface (a surface orthogonal to the vertical direction, along which gravity acts) stably (in a manner as not to further fall down even upon subjection to an external impact (excluding such a strong impact as to cause the particle to fly away from the horizontal surface)) is cut by a first plane and a second plane which are orthogonal to the horizontal surface (the first plane and the second plane intersect each other, typically at right angles), and the sections of the particle are observed, a dimension along the width direction (the dimension is referred to as the "width" of the particle), which is along the horizontal surface (in parallel with the horizontal surface or at an angle of α degrees (0 < α < 45) with respect to the horizontal surface), is greater than a dimension along the thickness direction (the dimension is referred to as the "thickness" of the particle), which is orthogonal to the width direction. The above-mentioned "thickness" does not include a gap between the horizontal surface and the particle.

The plate-like particle of the present invention is usually formed in a flat plate-like form. "Flat plate-like form" refers to a state in which, when a particle is placed stably on a horizontal surface, the height of a gap formed between the horizontal surface and the particle is less than the thickness of the particle. Since a plate-like particle of this kind is not usually curved to an extent greater than the state, the above-mentioned definition is appropriate for the plate-like particle of the present invention.

In a state in which a particle is placed stably on a horizontal surface, the thickness direction is not necessarily parallel with the vertical direction. This will be discussed under the assumption that the sectional shape of particle placed stably on a horizontal surface, as cut by the first plane or the second plane, should be classified into the closest one among (1) rectangular shape, (2) diamond shape, and (3) elliptic shape. When the sectional shape of the particle is close to (1) rectangular shape, the width direction is parallel with the horizontal surface in the above-mentioned state, and the thickness direction is parallel with the vertical direction in the above-mentioned state.

Meanwhile, when the sectional shape of the particle is (2) diamond shape or (3) elliptic shape, the width direction may form some angle (45 degrees or less; typically, about a few degrees to about 20 degrees) with respect to the horizontal surface. In this case, the width direction is a direction which connects the two most distant points on the outline of the section (this definition is not appropriate for the case of (1) rectangular shape, since the direction according thereto is along a diagonal of the rectangular shape).

The "plate surface" of a particle refers to a surface which faces, in a state in which the particle is placed stably on a horizontal surface, the horizontal surface, or a surface which faces an imaginary plane located above the particle as viewed from the horizontal surface and being parallel with the horizontal surface. Since the "plate surface" of a particle is the widest surface on the plate-like particle, the "plate surface" may be referred to as the "principal surface." A surface which intersects (typically, at right angles) the plate surface (principal surface); i.e., a surface which intersects the plate surface direction (or in-plane direction), which is perpendicular to the thickness direction, is referred to as an "end surface," since the surface arises at an edge when the particle in a state of being stably placed on the horizontal surface is viewed in plane (when the particle in a state of being stably placed on the horizontal surface is viewed from above with respect to the vertical direction).

Nevertheless, in many cases, the plate-like particle for a lithium secondary battery cathode active material of the present invention is formed such that the sectional shape of the particle is close to (1) rectangular shape. Thus, in the plate-like particle for a lithium secondary battery cathode active material of the present invention, the thickness direction may be said to be parallel with the vertical direction in a state in which the particle is placed stably on a horizontal surface. Similarly, in the plate-like particle for a lithium secondary battery cathode active material of the present invention, the "plate surface" of the particle may be said to be a surface orthogonal to the thickness direction.

The lithium secondary battery of the present invention includes a positive electrode which contains, as a cathode active material, the plate-like particles for cathode active material of the present invention; a negative electrode which contains, as an anode active material, a carbonaceous material or a lithium-occluding material; and an electrolyte provided so as to intervene between the positive electrode and the negative electrode.

In formation of a positive electrode of a lithium secondary battery, for example, the plate-like particles for cathode active material are dispersed in a binder so as to form a cathode active material layer. A laminate of the cathode active material layer and a predetermined cathode collector serves as the positive electrode. That is, in this case, the positive electrode is formed by stacking the cathode active material layer, which contains the plate-like particles, on the cathode collector.

In another aspect of the present invention, a cathode active material film for a lithium secondary battery, the film being represented by the above general formula and having a layered rock salt structure, is characterized in that the (003) plane in the structure is oriented so as to intersect the plate surface of the film (the definition of the "plate surface" of the film will be described later).

That is, the film is formed such that a plane other than the (003) plane (e.g., the (104) plane) is oriented in parallel with the plate surface of the film. In this case, the positive electrode of the lithium secondary battery can be formed by stacking the cathode active material film on a predetermined cathode collector. The film may be formed to a thickness of 100 µm or less (e.g., 20 µm or less).

The above-mentioned characteristic can be rephrased as: in the cathode active material film for a lithium secondary battery of the present invention, the [003] axis in the layered rock salt structure is oriented in a direction which intersects the normal to the plate surface of the film. That is, the particle is formed such that a crystal axis (e.g., the [104] axis) which intersects the [003] axis is oriented in a direction orthogonal to the plate surface.

The "thickness direction" of a film refers to a direction parallel with the vertical direction in a state in which the film is placed stably on a horizontal surface (a dimension of the film along the direction is referred to as "thickness"). The "plate surface" of a film refers to a surface orthogonal to the thickness direction of the film. Since the "plate surface" of the film is the widest surface on the film, the "plate surface" may be referred to as the "principal surface." A surface which intersects (typically, at right angles) the plate surface (principal surface); i.e., a surface which intersects the plate surface direction (or in-plane direction), which is perpendicular to the thickness direction, is referred to as an "end surface," since the surface arises at an edge when the film in a state of being stably placed on the horizontal surface is viewed in plane (when the film in a state of being stably placed on the horizontal surface is viewed from above with respect to the vertical direction). The above-mentioned "thickness" does not include a gap between the horizontal surface and the particle.

The cathode active material film of the present invention is usually formed flat. "Flat" refers to a state in which, when a film is placed stably on a horizontal surface, the height of a gap formed between the horizontal surface and the film is less than the thickness of the film. Since a cathode active material film of this kind is not usually curved to an extent greater than the state, the above-mentioned definition is appropriate for the cathode active material film of the present invention.

The lithium secondary battery of the present invention includes a positive electrode which includes the cathode active material film of the present invention; a negative electrode which contains a carbonaceous material or a lithium-occluding material as an anode active material; and an electrolyte provided so as to intervene between the positive electrode and the negative electrode.

In formation of the positive electrode of a lithium secondary battery, for example, a laminate of the cathode active material film and a predetermined cathode collector (for example, a laminate formed by laminating the cathode active material film and an electric conductor film together through vapor deposition (e.g., sputtering), application, or the like) serves as the positive electrode. In this case, the cathode collector may be provided on at least one of the two plate surfaces of the cathode active material film. That is, the cathode collector may be provided on only one of the two plate surfaces of the cathode active material film. Alternatively, the cathode collector may be provided on both surfaces (both of the two plate surfaces) of the cathode active material film. When the cathode collector is provided on each of both surfaces of the cathode active material film, one of them may be formed thicker than the other in order to support the cathode active material film, and the other may be formed so as to have a structure (mesh-like, porous or the like) such that it does not inhibit the intercalation and deintercalation of lithium ions in the cathode active material film.

As mentioned above, in formation of the positive electrode, the "plate-like particles for cathode active material" in the present invention can be dispersed in the cathode active material layer. Meanwhile, the "cathode active material film" in the present invention is a self-standing film (a film which can be handled by itself after formation) which can form the positive electrode through lamination to the cathode collector. As in the case of examples to be described later, the film may be crushed into fine particles (the resultant particles correspond to the "plate-like particles for cathode active material" in the present invention), followed by dispersion in the cathode active material layer. In this way, the distinction between "particles" and "film" is apparent to those skilled in the art in association with modes of application to formation of the positive electrode.

Regarding the degree of orientation, preferably, the ratio of intensity of diffraction by the (003) plane to intensity of diffraction by the (104) plane, [003]/[104], as obtained by X-ray diffraction is 1 or less. Thus , the deintercalation of lithium ions is facilitated, resulting in a remarkable improvement in charge-discharge characteristics.

However, when the ratio [003]/[104] is less than 0.005, the cycle characteristic deteriorates. Conceivably, this is because, when the degree of orientation is excessively high (i.e., crystals are oriented to an excessively high degree), a change in the volume of crystal associated with intercalation and deintercalation of lithium ions causes the particles and the film to be apt to break (the specifics of the reason for the deterioration in cycle characteristic are not clear).

Further, the plate-like particle for cathode active material and the cathode active material film according to the present invention may be formed to be dense (e.g., with a porosity of 10 % or less). Specifically, porosity falls preferably within a range of 3 to 10%. Porosity less than 3% is unpreferable for the following reason: due to the volume expansion-contraction associated with charge-discharge, concentration of stress occurs at a boundary between the domains whose crystal orientations are different in the particle or the film. This causes cracking then capacity is apt to be low. On the other hand, porosity more than 10% is unpreferable because charge-discharge capacity per volume decreses.

According to the present invention, in the plate-like particles and film which have the above-mentioned structure, a plane through which lithium ions are favorably intercalated and deintercalated (a plane other than the (003) plane; e.g., the (104) plane) is oriented in parallel with the plate surface. Thus, the exposure (contact) of the plane to an electrolyte increases to a greater extent, and the percentage of exposure of the (003) plane at the surface of the particles and film greatly lowers.

Thus, in accordance with the present invention, in the plate-like particle and the film having the above-mentioned structure, good characteristics can be obtained. For example, in the case of the film to be used as material for a positive electrode of a solid-type lithium secondary battery, high capacity and high rate characteristic can be attained simultaneously. Alternatively, in the case of the plate-like particles to be used as material for a positive electrode of a liquid-type lithium secondary battery, even when the particle size is increased for improving durability and attaining high capacity, high rate characteristic can be maintained.

In addition, the present invention can provide a lithium secondary battery whose capacity, durability, and rate characteristic are improved as compared with those of a conventional lithium secondary battery.

### Brief Description of the Drawings

FIG. 1A is a sectional view of the schematic configuration of a lithium secondary battery according to an embodiment of the present invention.
FIG. 1B is an enlarged sectional view of a positive electrode shown in FIG. 1A.
FIG. 2A is an enlarged perspective view of a plate-like particle for cathode active material shown in FIG. 1.
FIG. 2B is an enlarged perspective view of a cathode active material particle of a comparative example.
FIG. 2C is an enlarged perspective view of a cathode active material particle of a comparative example.
FIG. 3A is a sectional view of the schematic configuration of a lithium secondary battery of another embodiment of the present invention.
FIG. 3B is an enlarged sectional view of a cathode active material layer shown in FIG. 3A.
FIG. 4 is a sectional view of the schematic configuration of a lithium secondary battery of further another embodiment of the present invention.
FIG. 5 is a sectional view of the structure of a modification of the positive electrode shown in FIG. 1B.
FIG. 6A is a sectional view of the structure of a modification of the positive electrode shown in FIG. 1B.
FIG. 6B is a sectional view of the structure of a modification of the positive electrode shown in FIG. 1B.

### Description of Embodiments

Preferred embodiments of the present invention will next be described by use of examples and comparative examples. The following description of the embodiments is nothing more than the specific description of mere example embodiments of the present invention to the possible extent in order to fulfill description requirements (descriptive requirement and enabling requirement) of specifications required by law. Thus, as will be described later, naturally, the present invention is not limited to the specific configurations of embodiments and examples to be described below. Modifications that can be made to the embodiments and examples are collectively described herein principally at the end, since insertion thereof into the description of the embodiments would disturb understanding of consistent description of the embodiments.

### <Configuration 1 of lithium secondary battery: liquid type>

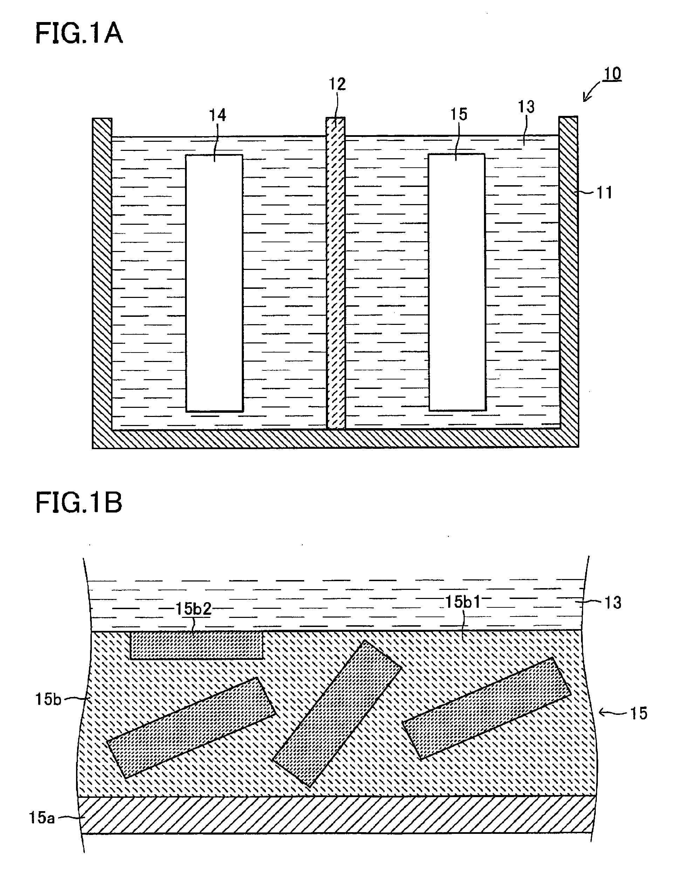

FIG. 1A is a sectional view of the schematic configuration of a lithium secondary battery 10 according to an embodiment of the present invention.

Referring to FIG. 1A, the lithium secondary battery 10 of the present embodiment is of a so-called liquid type and includes a cell casing 11, a separator 12, an electrolyte 13, a negative electrode 14, and a positive electrode 15.

The separator 12 is provided so as to halve the interior of the cell casing 11. The cell casing 11 accommodates the liquid electrolyte 13. The negative electrode 14 and the positive electrode 15 are provided within the cell casing 11 in such a manner as to face each other with the separator 12 located therebetween.

For example, a nonaqueous-solvent-based electrolytic solution prepared by dissolving an electrolyte salt, such as a lithium salt, in a nonaqueous solvent, such as an organic solvent, is preferably used as the electrolyte 13, in view of electrical characteristics and easy handlability. However, a polymer electrolyte, a gel electrolyte, an organic solid electrolyte, or an inorganic solid electrolyte can also be used as the electrolyte 13 without problems.

No particular limitation is imposed on a solvent for a nonaqueous electrolytic solution. Examples of the solvent include chain esters, such as dimethyl carbonate, diethyl carbonate, ethyl methyl carbonate, and methyl propione carbonate; cyclic esters having high dielectric constant, such as ethylene carbonate, propylene carbonate, butylene carbonate, and vinylene carbonate; and mixed solvents of a chain ester and a cyclic ester. A mixed solvent containing a chain ester serving as a main solvent with a cyclic ester is particularly suitable.

In preparation of a nonaqueous electrolytic solution, examples of an electrolyte salt to be dissolved in the above-mentioned solvent include LiClO₄, LiPF₆, LiBF₄, LiAsF₆, LiSbF₆, LiCF₃SO₃, LiC₄F₉SO₃, LiCF₃CO₂, Li₂C₂F₄(SO₃)₂, LiN(RfSO₂)(Rf'SO₂), LiC(RfSO₂)₃, LiCₙF₂ₙ₊₁SO₃(n ≥ 2), and LiN(RfOSO₂)₂ [Rf and Rf are fluoroalkyl groups]. They may be used singly or in combination of two or more species. Among the above-mentioned electrolyte salts, a fluorine-containing organic lithium salt having a carbon number of 2 or greater is particularly preferred. This is because the fluorine-containing organic lithium salt is high in anionic property and readily undergoes ionization, and is thus readily dissolvable in the above-mentioned solvent. No particular limitation is imposed on the concentration of electrolyte salt in a nonaqueous electrolytic solution. However, for example, the concentration is preferably 0.3 mol/L to 1.7 mol/L, more preferably 0.4 mol/L to 1.5 mol/L.

Any anode active material may be used for the negative electrode 14, so long as the material can occlude and release lithium ions. For example, there are used carbonaceous materials, such as graphite, pyrolytic carbon, coke, glassy carbon, a sintered body of organic high polymer compound, mesocarbon microbeads, carbon fiber, and activated carbon. Also, metallic lithium or a lithium-occluding material such as an alloy which contains silicon, tin, indium, or the like; an oxide of silicon, tin, or the like which can perform charge and discharge at low electric potential near that at which lithium does; a nitride of lithium and cobalt such as Li_{2.6}Co_{0.4}N can be used as the anode active material. Further, a portion of graphite can be replaced with a metal which can be alloyed with lithium, or with an oxide. When graphite is used as the anode active material, voltage at full charge can be considered to be about 0.1 V (vs. lithium); thus, the electric potential of the positive electrode 15 can be conveniently calculated as a cell voltage plus 0.1 V. Therefore, since the electric potential of charge of the positive electrode 15 is readily controlled, graphite is preferred.

FIG. 1B is an enlarged sectional view of the positive electrode 15 shown in FIG. 1A. Referring to FIG. 1B, the positive electrode 15 includes a cathode collector 15a and a cathode active material layer 15b. The cathode active material layer 15b is composed of a binder 15b1 and plate-like particles 15b2 for cathode active material.

Since the basic configurations of the lithium secondary battery 10 and the positive electrode 15 (including materials used to form the cell casing 11, the separator 12, the electrolyte 13, the negative electrode 14, the cathode collector 15a, and the binder 15b1) shown in FIGS. 1A and 1B are well known, detailed description thereof is omitted herein.

The plate-like particle 15b2 for cathode active material according to an embodiment of the present invention is a cobalt-nickel system particle having a layered rock salt structure, more particularly, a particle represented by the following general formula and formed into a plate-like form having a thickness of about 2 µm to 100 µm.

General formula: Liₚ(Niₓ,CO_{y},Al_{z})O₂

(wherein 0.9 ≤ p ≤ 1.3, 0.6 < x ≤ 0.9, 0.1 < y ≤ 0.3, 0 ≤ z ≤ 0.2, x + y + z = 1)

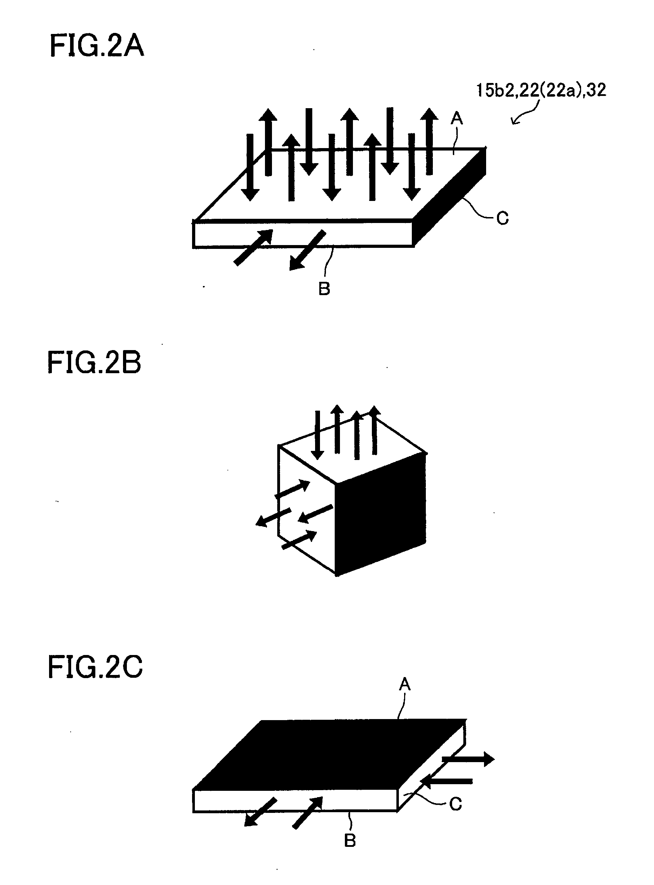

FIG. 2A is an enlarged perspective view of the plate-like particle 15b2 for cathode active material shown in FIG. 1. FIGS. 2B and 2C are enlarged perspective views of cathode active material particles of comparative examples.

As shown in FIG. 2A, the plate-like particle 15b2 for cathode active material is formed such that a plane other than the (003) plane (e.g., the (101) plane or the (104) plane) is exposed at a plate surface (upper surface A and lower surface B: hereinafter, the "upper surface A" and the "lower surface B" are referred to as the "plate surface A" and the "plate surface B," respectively), which is a surface normal to the thickness direction (the vertical direction in the drawings).

That is, the plate-like particle 15b2 for cathode active material is formed such that the plane other than the (003) plane (e.g., the (104) plane) is oriented in parallel with the plate surfaces A and B of the particle. The (003) plane (colored black in the drawing) may be exposed at the end surfaces C, which intersects the plate surface direction (in-plane direction).

By contrast, the particle of a comparative example shown in FIG. 2B is formed into an isotropic shape rather than a thin plate. The particle of a comparative example shown in FIG. 2C is in the form of a thin plate, but is formed such that the (003) planes are exposed at both surfaces (plate surfaces A and B) located in the thickness direction of the particle. The particles of these comparative examples are manufactured by conventional manufacturing methods.

### <Configuration 2 of lithium secondary battery: full solid type>

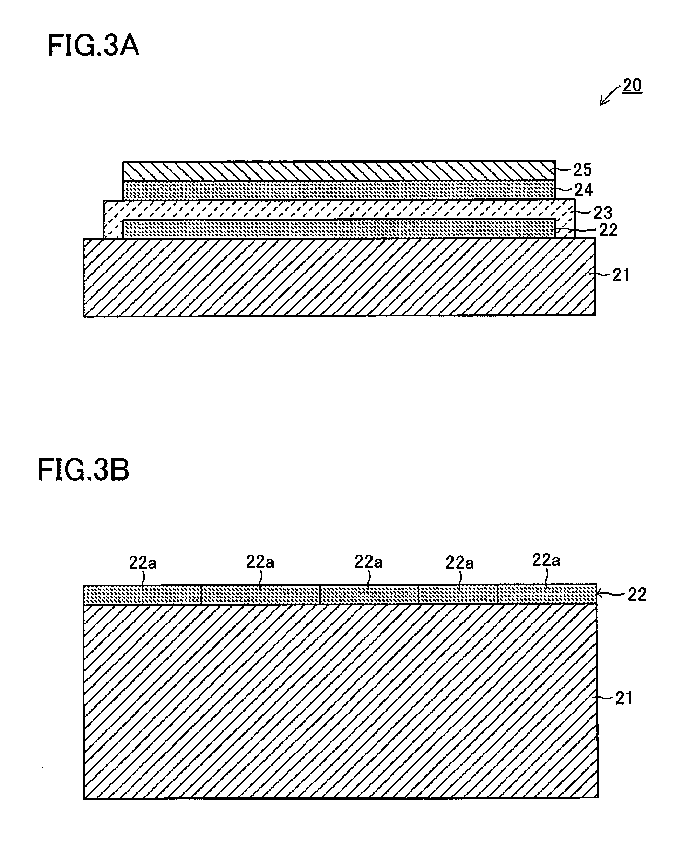

FIG. 3A is a sectional view of the schematic configuration of a lithium secondary battery 20 of a modification. Referring to FIG. 3A, the lithium secondary battery 20 is of a so-called full solid type and includes a cathode collector 21, a cathode active material layer 22, a solid electrolyte layer 23, an anode active material layer 24, and an anode collector 25. The lithium secondary battery 20 is formed by laminating, on the cathode collector 21, the cathode active material layer 22, the solid electrolyte layer 23, the anode active material layer 24, and the anode collector 25 in this order.

Since the basic configuration of the lithium secondary battery 20 (including materials used to form the cathode collector 21, the solid electrolyte layer 23, the anode active material layer 24, and the anode collector 25) shown in FIG. 3A is well known, detailed description thereof is omitted herein.

FIG. 3B is an enlarged sectional view of the cathode active material layer 22 shown in FIG. 3A. Referring to FIG. 3B, the cathode active material layer 22, which serves as the cathode active material film of the present invention, is formed such that a large number of plate-like grains (or crystallites) 22a are joined together in planar directions to assume a film-like form. The plate-like grain 22a also has a structure similar to that of the plate-like particle 15b2 for cathode active material in the above-described embodiment (for example, a structure in which planes other than the (003) plane (e.g., the (104) plane) are exposed at a surface whose direction of normal is along the thickness direction (upper and lower surfaces in the drawing)).

### <Configuration 3 of lithium secondary battery: polymer type>

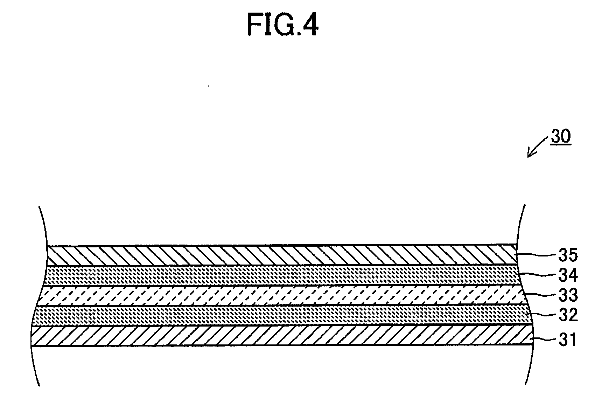

FIG. 4 is a sectional view of the schematic configuration of a lithium secondary battery 30 of another modification. Referring to FIG. 4, the lithium secondary battery 30 is of a so-called polymer type and includes a cathode collector 31, a cathode active material layer 32, a polymer electrolyte layer 33, an anode active material layer 34, and an anode collector 35. The lithium secondary battery 30 is formed by laminating, on the cathode collector 31, the cathode active material layer 32, the polymer electrolyte layer 33, the anode active material layer 34, and the anode collector 35 in this order. The cathode active material layer 32, which serves as the cathode active material film of the present invention, has a constitution similar to that of the above-described cathode active material layer 22 (see FIG. 3B).

### <Outline of method for manufacturing plate-like particles for cathode active material and cathode active material layer>

The plate-like particles 15b2 for cathode active material, the cathode active material layer 22 and the cathode active material layer 32 are readily and reliably manufactured by the following manufacturing method.

There is formed a green sheet which has a thickness of 20 µm or less and contains an NiO powder, a CO₃O₄ powder, and Al₂O₃ powder.

The green sheet is atmospherically-sintered at a temperature which falls within a range of 1,000°C to 1,400°C for a predetermined time, thereby yielding an independent film-like sheet (self-standing film) composed of a large number of (h00)-oriented plate-like (Ni,Co,Al)O grains. By means of adding additives, such as MnO₂ and ZnO, grain growth is accelerated, resulting in enhancement of (h00) orientation of plate-like crystal grains.

The "independent" sheet refers to a sheet which, after sintering, can be handled by itself independent of the other support member. That is, the "independent" sheet does not include a sheet which is fixedly attached to another support member (substrate or the like) through sintering and is thus integral with the support member (unseparable or difficult to be separated).

In the thus-formed green sheet in the form of a self-standing film, the amount of material present in the thickness direction is very small as compared with that in a plate surface direction; i.e., in an in-plane direction (a direction orthogonal to the thickness direction).

Thus, at the initial stage at which a plurality of particles are present in the thickness direction, grain growth progresses in random directions. As the material in the thickness direction is consumed with progress of grain growth, the direction of grain growth is limited to two-dimensional directions within the plane. Accordingly, grain growth in planar directions is reliably accelerated.

Particularly, by means of forming the green sheet to the smallest possible thickness (e.g., several µm or less) or accelerating grain growth to the greatest possible extent despite a relatively large thickness of about 100 µm (e.g., about 20 µm), grain growth in planar directions is more reliably accelerated.

Both of strain energy and surface energy contribute to selective grain growth (preferred orientation) of grains oriented in a particular direction. The (003) plane is most stable with respect to surface energy, whereas the (101) and (104) planes are stable with respect to strain energy.

Herein, the strain energy refers to internal stress in the course of grain growth and stress associated with defect or the like. A layer compound is generally known to have high strain energy.

At a film thickness of 0.1 µm or less, the ratio of surface to sheet volume is high; thus, selective growth is subjected to surface energy, thereby yielding (003)-plane-oriented grains. Meanwhile, at a film thickness of 0.1 µm or greater, the ratio of surface to sheet volume lowers; thus, selective growth is subjected to strain energy, thereby yielding (101)-plane- and (104)-plane-oriented grains. However, a sheet having a film thickness of 100 µm or greater encounters difficulty in densification. Thus, internal stress is not accumulated in the course of grain growth, so that selective orientation is not confirmed.

Thus, sintering the green sheet formed as mentioned above to be film-like yields a self-standing film formed as follows: a large number of thin plate-like grains in which particular crystal faces are oriented in parallel with the plate surfaces of the grains are joined together at grain boundaries in planar directions (refer to Japanese Patent Application No. 2007-283184 filed by the applicant of the present invention). That is, there is formed a self-standing film in which the number of crystal grains in the thickness direction is substantially one. The meaning of "the number of crystal grains in the thickness direction is substantially one" does not exclude a state in which portions (e.g., end portions) of in-plane adjacent crystal grains overlie each other in the thickness direction. The self-standing film can become a dense ceramic sheet in which a large number of thin plate-like grains as mentioned above are joined together without clearance therebetween.

The (h00)-oriented (Ni,Co,Al)O ceramic sheet yielded in the above-mentioned process and lithium nitrate (LiNPO₃) are mixed, followed by heating for a predetermined time, whereby lithium is introduced into the (Ni,Co,Al)O grains. Thus is yielded a (104)-oriented Li (Ni_{0.75}Co_{0.2}Al_{0.05})O₂ film-like sheet for cathode active material.

The film-like sheet yielded in the above-mentioned step is in such a state that the sheet is apt to break at grain boundaries. Thus, the film-like sheet yielded in the above-mentioned step is placed on a mesh having a predetermined mesh size, and then a spatula is pressed against the sheet from above, whereby the sheet is crushed into a large number of particles.

### [Example 1]

### «Preparation of slurry»

First, a slurry was prepared by the following method.

An NiO powder (particle size: 1 µm to 10 µm; product of Seido Chemical Industry Co., Ltd.) (75.1 parts by weight), a Co₃O₄ powder (particle size: 1 µm to 5 µm; product of Seido Chemical Industry Co., Ltd.) (21.5 parts by weight), and an Al₂O₃ powder (particle size: 1 µm to 10 µm; product of Showa Denko K.K.) (3.4 parts by weight) were mixed and pulverized, followed by heat treatment at 1,300°C in the atmosphere for five hours. Thus was synthesized an (Ni,Co,Al)O powder.

The powder was milled in a pot mill for 16 hours, thereby yielding (Ni,Co,Al)O material particles (particle size: 0.3 µm). The material particles (100 parts by weight), a dispersion medium (toluene : isopropanol = 1 : 1) (100 parts by weight), a binder (polyvinyl butyral: product No. BM-2; product of Sekisui Chemical Co. Ltd.) (10 parts by weight), a plasticizer (DOP: Di (2-ethylhexyl) phthalate; product of Kurogane Kasei Co., Ltd.) (4 parts by weight), and a dispersant (product name RHEODOL SP-O30, product of Kao Corp.) (2 parts by weight) were mixed. The resultant mixture was stirred under reduced pressure for defoaming and was prepared to a viscosity of 3,000 cP to 4,000 cP.

### «Formation of tape»

The thus-prepared slurry was formed into a sheet on a PET film by the doctor blade process such that the thickness of the sheet was 8 µm as measured after drying.

### «Sintering»

A 50 mm square piece was cut out from the sheet-like compact separated from the PET film by means of a cutter; the piece was placed at the center of a setter (dimensions: 90 mm square × 1 mm high) made of zirconia and embossed in such a manner as to have a protrusion size of 300 µm, followed by heat treatment at 1,300°C in air for 10 hours; the atmosphere of the sintering furnace was changed to an oxygen atmosphere, the temperature was lowered to room temperature at a rate of 200°C/h; and a portion of the piece which was not fused to the setter was taken out.

### «Lithium introduction»

The thus-yielded (Ni,Co,Al)O ceramic sheet and an LiNO₃ powder (product of Kanto Chemical Co., Inc.) were mixed at a mol ratio Li/(NiCoAl) of 1.5. The resultant mixture was heat-treated at 750°C in an oxygen atmosphere (0.1 MPa) for five hours, thereby yielding an Li (Ni,Co,Al)O₂ sheet. The sheet surface was subjected to XRD measurement (evaluation of orientation); as a result, the [003]/[104] ratio was found to be 0.4.

### «Evaluation»

XRD (X-ray diffraction) measurement was carried out by the following method: a mixture prepared by adding plate-like particles (0.1 g) to ethanol (2 g) was subjected to dispersion for 30 minutes by means of an ultrasonic dispersing device (ultrasonic cleaner); and the resultant dispersion liquid was spin-coated at 2,000 rpm onto a glass substrate measuring 25 mm × 50 mm so as to prevent overlap of the plate-like particles to the greatest possible extent and to bring crystal faces in parallel with the glass substrate surface. By means of an XRD apparatus (GEIGER FLEX RAD-IB, product of Rigaku Corp.), the surfaces of the plate-like particles were irradiated with X-ray so as to measure an XRD profile, thereby obtaining the ratio of intensity (peak height) of diffraction by the (003) plane to intensity (peak height) of diffraction by the (104) plane, [003]/[104]. In the above-mentioned method, the plate surface of the plate-like particles are in surface contact with the glass substrate surface, so that the particle plate surface is in parallel with the glass substrate surface. Thus, according to the above-mentioned method, there is obtained a profile of diffraction by crystal faces present in parallel with crystal faces of the particle plate surface; i.e., a profile of diffraction by crystal faces oriented in a plate surface direction of a particle.

In order to evaluate cell characteristics regarding the plate-like particle, a cell was fabricated in the following manner.

The yielded particles, acetylene black, and polyvinylidene fluoride (PVDF) were mixed at a mass ratio of 75 : 20 : 5, thereby preparing a positive-electrode material. The prepared positive-electrode material (0.02 g) was compacted to a disk having a diameter of 20 mm under a pressure of 300 kg/cm², thereby yielding a positive electrode.

The yielded positive electrode, a negative electrode formed from a lithium metal plate, stainless steel collector plates, and a separator were arranged in the order of collector plate-positive electrode-separator-negative electrode-collector plate. The resultant laminate was filled with an electrolytic solution, thereby yielding a coin cell. The electrolytic solution was prepared as follows: ethylene carbonate (EC) and diethyl carbonate (DEC) were mixed at a volume ratio of 1:1 so as to prepare an organic solvent, and LiPF₆ was dissolved in the organic solvent at a concentration of 1 mol/L.

The thus-fabricated coin cell was evaluated for cell capacity (discharge capacity) and capacity retention percentage.

One cycle consists of the following charge and discharge operations:
constant-current charge is carried out at 0.1C rate of current until the cell voltage becomes 4.2 V; subsequently, constant-voltage charge is carried out under a current condition of maintaining the cell voltage at 4.2 V, until the current drops to 1/20, followed by 10 minutes rest; and then, constant-current discharge is carried out at 1C rate of current until the cell voltage becomes 3.0 V, followed by 10 minutes rest. A total of three cycles were repeated under a condition of 25°C. The discharge capacity in the third cycle was measured.

The fabricated cell was subjected to cyclic charge-discharge at a test temperature of 25°C. The cyclic charge-discharge repeats: (1) charge at 1C rate of constant current and constant voltage until 4.2 V is reached, and (2) discharge at 1C rate of constant current until 3.0 V is reached. The capacity retention percentage (%) was defined as a value obtained by dividing the discharge capacity of the cell as measured after 100 charge-discharge cycles by the initial discharge capacity of the cell.

Further, in order to evaluate cell characteristics regarding the active material film (self-standing film), a cell was fabricated in the following manner.

Au was deposited, by sputtering, on one side of the self-standing film having a diameter of about 16 mm so as to form a current collection layer (thickness: 500 angstroms), thereby yielding a positive electrode. The yielded positive electrode, a negative electrode formed from a lithium metal plate, stainless steel collector plates, and a separator were arranged in the order of collector plate-positive electrode-separator-negative electrode-collector plate. The resultant laminate was filled with an electrolytic solution similar to that mentioned above, thereby yielding a coin cell.

Tables 1 and 2 show the results of evaluation of various experimental examples which were rendered different in the degree of orientation by changing the conditions of heat treatment (sheet sintering) and lithium introduction as employed in Example 1 described above. In the tables, Experimental Example 4 coincides with Example 1 described above.

**[Table 1]**

| | Sheet sintering conditions | | Lithium introduction conditions | | |
|---|---|---|---|---|---|
| | Temp.[°C] | Time[h] | Temp.[°C] | Time[h] | Oxygen partial pressure[MPa] |
| Comp. Ex. 1 | 1150 | 5 | 750 | 10 | 0.1 |
| Exp. Ex. 1 | 1300 | 5 | 750 | 10 | 0.1 |
| Exp. Ex. 2 | 1300 | 10 | 800 | 10 | 0.1 |
| Exp. Ex. 3 | 1300 | 10 | 750 | 10 | 0.1 |
| Exp. Ex. 4 | 1300 | 10 | 750 | 5 | 0.1 |
| Exp. Ex. 5 | 1300 | 20 | 750 | 5 | 0.2 |
| Exp. Ex. 6 | 1300 | 20 | 750 | 5 | 0.4 |
| Comp. Ex. 2 | 1300 | 20 | 750 | 5 | 0.6 |

**[Table 2]**

| | [003]/[104] Peak intensity ratio | Plate-like particle | | Active material film | |
|---|---|---|---|---|---|
| | | Discharge capacity [mAh/g] | Capacity retention percentage [%] | Discharge capacity [mAh/g] | Capacity retention percentage [%] |
| Comp. Ex. 1 | 1.8 | 105 | 95 | 80 | 96 |
| Exp. Ex. 1 | 1 | 125 | 95 | 100 | 96 |
| Exp. Ex. 2 | 0.8 | 130 | 94 | 105 | 96 |
| Exp. Ex. 3 | 0.6 | 145 | 94 | 120 | 95 |
| Exp. Ex. 4 | 0.4 | 150 | 94 | 130 | 95 |
| Exp. Ex. 5 | 0.1 | 150 | 93 | 130 | 92 |
| Exp. Ex. 6 | 0.005 | 150 | 90 | 135 | 92 |
| Comp. Ex. 2 | 0.003 | 150 | 85 | 135 | 86 |

As shown in Table 2, in Comparative Example 1, in which the ratio [003]/[104] was in excess of 1.0, the discharge capacity lowered. In Comparative Example 2, in which the ratio [003]/[104] is less than 0.005, the capacity retention percentage lowered. In Experimental Examples 1 to 6, in which the ratio [003]/[104] falls within a range of 0.005 to 1.0, good discharge capacity and capacity retention percentage were exhibited.

The particle according to the embodiments of the present invention has a very dense structure. Porosity as measured from the results of image processing of images obtained through a scanning electron microscope was 10% or less.

In the above-mentioned examples, a portion of nickel in a cobalt-nickel system is substituted with aluminum. However, the present invention is not limited thereto. Needless to say, the present invention can also be favorably applied to Li(Ni,Co)O₂.

### <Effects of the embodiment>

As mentioned above, in the plate-like particle 15b2 for cathode active material, the cathode active material layer 22 and the cathode active material layer 32, the (104) planes, through which lithium ions are favorably intercalated and deintercalated, are oriented in parallel with the plate surface and are exposed at most of the surface. Meanwhile, the (003) planes, through which lithium ions cannot be intercalated and deintercalated, are merely slightly exposed at end surfaces (see FIG. 2A). That is, to the electrolyte 13 (including that infiltrating into the binder 15b1), the planes through which lithium ions are favorably intercalated into and deintercalated are exposed to a greater extent, whereas the (003) planes, through which lithium ions cannot be intercalated and deintercalated, are exposed to a very small extent.

In ordinary particles for cathode active material (as shown in FIGS. 2B and 2C), reducing the particle size enhances rate characteristic because of an increase in specific surface, but is accompanied by a deterioration in durability due to a deterioration in particle strength, and a reduction in capacity due to an increase in the percentage of a binder. In this manner, in ordinary (conventional) particles for cathode active material, the rate characteristic is in trade-off relation with durability and capacity.

By contrast, in the plate-like particles 15b2 for cathode active material of the present embodiment, when durability and capacity are enhanced through an increase in particle size, the total area of those planes through which lithium ions are readily released also increases, so that high rate characteristic is obtained. Thus, according to the present embodiment, capacity, durability, and rate characteristic can be enhanced as compared with conventional counterparts.

Particularly, a lithium ion secondary cell for use in mobile equipment, such as cellphones and notebook-style PCs, is required to provide high capacity for long hours of use. For implementation of high capacity, increasing the filling rate of an active material powder is effective, and the use of large particles having a particle size of 10 µm or greater is preferred in view of good filling performance.

In this regard, according to conventional techniques, an attempt to increase the particle size to 10 µm or greater leads to a plate-like particle in which the (003) planes, through which lithium ions and electrons cannot be intercalated and deintercalated, are exposed at a wide portion of the plate surface of the plate-like particle (see FIG. 2C) for the reason of crystal structure, potentially having an adverse effect on output characteristics.

By contrast, in the plate-like particle 15b2 for cathode active material of the present embodiment, conductive planes for lithium ions and electrons are widely exposed at the surface of the plate-like particle. Thus, according to the present embodiment, the particle size can be increased without involvement of adverse effect on output characteristics. Therefore, the present embodiment can provide a positive-electrode material sheet having high capacity and a filling rate higher than that of a conventional counterpart.

The plate-like particle 15b2 for cathode active material, a cathode active material layer 22, and a cathode active material layer 32 have a thickness of preferably 2 µm to 100 µm, more preferably 5 µm to 50 µm, further preferably 5 µm to 20 µm. A thickness in excess of 100 µm is unpreferable in view of deterioration in rate characteristic, and sheet formability. The plate thickness of the plate-like particle 15b2 for cathode active material is desirably 2 µm or greater. A thickness less than 2 µm is unpreferable in view of the effect of increasing the filling rate being small.

The aspect ratio of the plate-like particle 15b2 for cathode active material is desirably 4 to 20. At an aspect ratio less than 4, the effect of expanding a lithium ion intercalation/deintercalation surface through orientation becomes small. At an aspect ratio in excess of 20, when the plate-like particles 15b2 for cathode active material are filled into the cathode active material layer 15b such that the plate surfaces of the plate-like particles 15b2 for cathode active material are in parallel with an in-plane direction of the cathode active material layer 15b, a lithium ion diffusion path in the thickness direction of the cathode active material layer 15b becomes long, resulting in a deterioration in rate characteristic; thus, the aspect ratio is unpreferable.

In the thus-configured lithium secondary battery 20, the plate-like grain 22a is such that the percentage of exposure (contact) of the (003) planes, through which lithium ions cannot be intercalated and deintercalated, to the solid electrolyte layer 23 is considerably low. That is, unlike a conventional configuration as disclosed in Japanese Patent Application Laid-Open (*kokai*) No. 2003-132887, in the lithium secondary battery 20 of the present modification, almost all the surface of the cathode active material layer 22 which faces (is in contact with) the solid electrolyte layer 23 is composed of those planes (e.g., the (104) planes) through which lithium ions are favorably intercalated and deintercalated.

Thus, according to the present embodiment, the full-solid-type lithium secondary battery 20 achieves higher capacity and higher rate characteristic. Further, by increasing the size of the plate-like grain 22a, durability is improved, and far higher capacity and far higher rate characteristic are achieved.

As compared with a liquid type having the risk of liquid leakage, the polymer-type lithium secondary battery 30 is characterized in that a thin cell configuration is possible. The film-like cathode active material layer 32 of the present embodiment achieves substantially a filling rate of 100% while planes through which lithium ions are intercalated and deintercalated are arrayed over the entire film surface. That is, as compared with conventional practices, the positive electrode portion can be rendered very thin, and a thinner cell can be implemented.

### <Modifications>

The above-described embodiment and specific examples are, as mentioned above, mere examples of the best mode of the present invention which the applicant of the present invention contemplated at the time of filing the present application. The above-described embodiment and specific examples should not be construed as limiting the invention. Various modifications to the above-described embodiment and specific examples are possible, so long as the invention is not modified in essence.

Several modifications will next be exemplified. In the following description of the modifications, component members similar in structure and function to those of the above-described embodiment are denoted by names and reference numerals similar to those of the above-described embodiment. The description of the component members appearing in the above description of the embodiment can be applied as appropriate, so long as no inconsistencies are involved.

Needless to say, even modifications are not limited to those described below. Limitingly construing the present invention based on the above-described embodiment and the following modifications impairs the interests of an applicant (particularly, an applicant who is motivated to file as quickly as possible under the first-to-file system) while unfairly benefiting imitators, and is thus impermissible.

The structure of the above-described embodiment and the structures of the modifications to be described below are entirely or partially applicable in appropriate combination, so long as no technical inconsistencies are involved.

The present invention is not limited to the structure which is specifically disclosed in the description of the above embodiment.

For example, the cathode active material layer 15b shown in FIG. 1B may be a cathode active material film.

As an electrolyte, an inorganic solid, an organic polymer or a gel polymer (a gel formed by impregnating an organic polymer with an electrolytic solution) can be used.

In the above-described example, the cathode active material layer 22 is applied to a full-solid-type cell. Nevertheless, the present invention can also be applied to a liquid-type cell. Usually, material for a positive electrode of a liquid-type cell is filled with an active material at a filling rate of about 60%. By contrast, the active material film of the present invention achieves substantially a filling rate of 100% while planes through which lithium ions are intercalated and deintercalated are arrayed over the entire film surface. That is, while the sacrifice of rate characteristic is minimized, a very high capacity is attained.

The cathode active material layer 22 and the cathode collector 21 may be merely in contact with each other at the interface therebetween or may be bonded together by means of a thin layer of an electrically conductive binder, such as acetylene black. In the latter case, bending of the cathode collector 21 may cause cracking in the cathode active material layer 22. Nevertheless, such a crack is in parallel with the direction of conduction of electrons and ions. Thus, the occurrence of cracking does not raise any problem with respect to characteristics.

The surface of the cathode active material layer 22 may be polished to flatness. In this case, in order to remove stress and defect which remain on the polished surface, heat treatment at 1,000°C or lower may be conducted. The heat treatment improves adhesion between the cathode collector 21 and the solid electrolyte layer 23, and also improves charge-discharge characteristic because of exposure of active crystal faces.

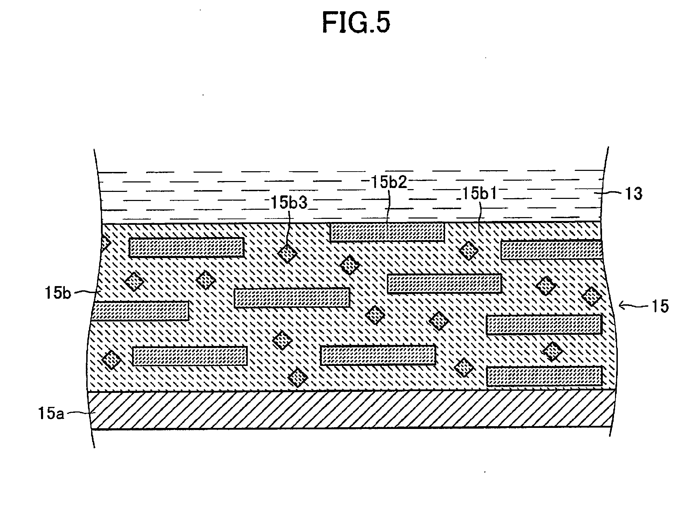

For example, the plate-like particles 15b2 of the present invention of a plurality of sizes and shapes may be blended as appropriate in the cathode active material layer 15b. As shown in FIG. 5, the plate-like particles 15b2 for cathode active material of the present invention and conventional isometric particles 15b3 may be mixed at an appropriate mixing ratio. For example, by means of mixing, at an appropriate mixing ratio, isometric particles and the plate-like particles 15b2 for cathode active material having a thickness substantially equivalent to the particle size of the isometric particle, the particles can be efficiently arrayed, whereby the filling rate can be raised.

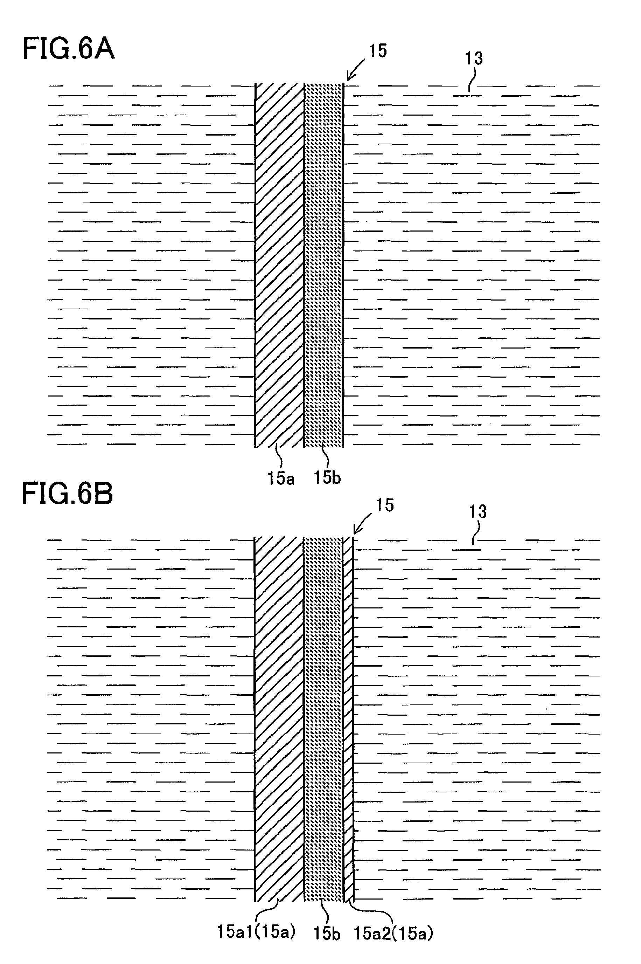

As mentioned above, when the cathode active material layer 15b is a self-standing-film-like ceramic sheet (cathode active material film), the cathode collector 15a may be provided on only one of both plate surfaces of the cathode active material layer 15b as shown in FIG. 6A, and may be provided on both plate surfaces of the cathode active material layer 15b as shown in FIG. 6B.

When the cathode collector 15a is provided on both plate surfaces of the cathode active material layer 15b as shown in FIG, 6B, one of the cathode current collectors, i.e. the cathode collector 15a1, may be formed thicker than the other cathode collector 15a2 in order to support the self-standing film-like cathode active material layer 15b. In addition, in this case, the other positive electrode collector 15a2 is formed as to have a structure (mesh-like, porous or the like) not to inhibit the intercalation and deintercalation of lithium ions in the self-standing film-like cathode active material layer 15b. Further, the cathode collector 15a2 is applicable to the positive electrode 15 shown in FIG. 1B as well.

When the cathode collector 15a is provided on only one of both plate surfaces of the cathode active material layer 15b as shown in FIG. 6A, during the cell reactions in the positive electrode 15 on charging and discharging, the direction of the movement of lithium ions and that of electrons become converse, and thus an electric potential gradient occurs within the cathode active material layer 15b. When the electric potential gradient increases, lithium ions become difficult to diffuse.

On the contrary, when the cathode collector 15a2 not inhibiting the intercalation and deintercalation of lithium ions is provided on the surface contacting the electrolyte 13 in the self-standing film-like cathode active material layer 15b as shown in FIG. 6B, the formation of electric potential gradient as described above is suppressed. Thus, the cell performance is improved.

As mentioned above, p preferably falls within a range of 0.9 ≤ p ≤ 1.3, more preferably within a range of 1.0 ≤ p ≤ 1.1. Thus, good charge - discharge capacity is realized.

Specifically, Li(Ni, Co, Al)O₂ powder was manufactured, for example, by a method similar to that in Example 1 except that the mole fraction Li/(Ni Co Al) was 2.0 when mixing (Ni, Co, Al)O ceramic sheet with LiNO₃ powder. Extra lithium compound was removed by washing treatment of the resultant Li(Ni, Co, Al)O₂ sheet. Thereafter, by componential analysis by means of ICP (inductively coupled plasma) emission spectrophotometer (product name ULTIMA2, product of HORIBA Ltd.), it was revealed that p = 1.1. In addition, an XRD measurement (evaluation of the orientation) showed that X-ray diffraction intensity ratio [003]/[104] = 0.4. On the contrary, a similar componential analysis of the Li(Ni, Co, Al)O₂ sheet manufactured in Example 1 revealed that p = 1.0.

The present invention is not limited to the manufacturing methods disclosed specifically in the description of the above-described embodiment.

For example, the sintering temperature for the green sheet may be a temperature falling within a range of 900°C to 1,300°C.

Needless to say, those modifications which are not particularly referred to are also encompassed in the technical scope of the present invention, so long as the invention is not modified in essence.

Those components which partially constitute means for solving the problems to be solved by the present invention and are illustrated with respect to operations and functions encompass not only the specific structures disclosed above in the description of the above embodiment and modifications but also any other structures that can implement the operations and functions. Further, the contents (including specifications and drawings) of the prior application and publications cited herein can be incorporated herein as appropriate by reference.

## Claims

1. A plate-like particle for a lithium secondary battery cathode active material, the particle being represented by the following general formula and having a layered rock salt structure, **characterized in that** a (003) plane is oriented so as to intersect a plate surface of the particle.
General formula: Liₚ(Niₓ,Co_{y},Al_{z})O₂
(wherein 0.9 ≤ p ≤ 1.3, 0.6 < x ≤ 0.9, 0.1 < y ≤ 0.3, 0 ≤ z ≤ 0.2, x + y +z=1)

2. A plate-like particle for a lithium secondary battery cathode active material according to claim 1, wherein a plane other than the (003) plane is oriented in parallel with the plate surface.

3. A plate-like particle for a lithium secondary battery cathode active material according to claim 2, wherein a (104) plane is oriented in parallel with the plate surface, and
the particle has a ratio of intensity of diffraction by the (003) plane to intensity of diffraction by the (104) plane, [003]/[104], as obtained by X-ray diffraction, of 1 or less.

4. A plate-like particle for a lithium secondary battery cathode active material according to claim 3, wherein the [003]/[104] is 0.005 or more.

5. A plate-like particle for a lithium secondary battery cathode active material according to any one of claims 1 to 4, wherein a porosity is 10 % or less.

6. A cathode active material film for a lithium secondary battery, the cathode active material film being represented by the following general formula and having a layered rock salt structure, **characterized in that** a (003) plane is oriented so as to intersect a plate surface of the film.
General formula: Liₚ(Niₓ,Co_{y},Al_{z})O₂
(wherein 0.9 ≤ p ≤ 1.3, 0.6 < x ≤ 0.9, 0.1 < y ≤ 0.3, 0 ≤ z ≤ 0.2, x + y + z = 1)

7. A cathode active material film for a lithium secondary battery according to claim 6, wherein a plane other than a (003) plane is oriented in parallel with the plate surface.

8. A cathode active material film for a lithium secondary battery according to claim 7, wherein a (104) plane is oriented in parallel with the plate surface, and
the film has a ratio of intensity of diffraction by the (003) plane to intensity of diffraction by the (104) plane, [003]/[104], as obtained by X-ray diffraction, of I or less.

9. A cathode active material film for a lithium secondary battery according to claim 8, wherein the [003]/[104] is 0.005 or more.

10. A cathode active material film for a lithium secondary battery according to any one of claims 6 to 9, wherein a porosity is 10 % or less.

11. A lithium secondary battery **characterized by** comprising:
a positive electrode which contains a plate-like particle according to any one of claims 1 to 5 as a cathode active material;
a negative electrode which contains a carbonaceous material or a lithium-occluding material as an anode active material; and
an electrolyte provided so as to intervene between the positive electrode and the negative electrode.

12. A lithium secondary battery **characterized by** comprising:
a positive electrode which includes a cathode active material film according to any one of claims 6 to 10;
a negative electrode which contains a carbonaceous material or a lithium-occluding material as an anode active material; and
an electrolyte provided so as to intervene between the positive electrode and the negative electrode.
